# EUROPEAN PATENT SPECIFICATION

(11) **EP 4 088 893 B1**
(45) Date of publication and mention of the grant of the patent: **20.03.2024**
(21) Application number: 21173237.5
(22) Date of filing: 11.05.2021
(51) Int. Cl.: B25J 15/00

(54) **A VESSEL HANDLING SYSTEM AND METHOD OF HANDLING SUCH VESSELS**
EIN SYSTEM ZUR HANDHABUNG VON GEFÄSSEN UND EIN VERFAHREN ZUR HANDHABUNG SOLCHER GEFÄSSE
UN SYSTÈME DE MANIPULATION DE RÉCIPIENTS ET UN PROCÉDÉ DE MANIPULATION DE CES RÉCIPIENTS

(43) Date of publication of application: 16.11.2022
(73) Proprietor: KUKA Deutschland GmbH, 86165 Augsburg (DE)
(72) Inventor: AKBAS, Adil, 86179 Augsburg (DE); BLOCK, Erich, 86163 Augsburg (DE); CAPRANO, Pascal, 86163 Augsburg (DE); AHMAD, Bilal, 86153 Augsburg (DE)
(74) Representative: Böss, Dieter Alexander

(56) References cited:
- EP-A2- 2 770 242
- CA-A1- 3 125 255
- DE-A1- 3 739 950
- TAI KEVIN ET AL: "Development of a unique grip and lift mechanism for automated test water systems", 2015 IEEE INTERNATIONAL CONFERENCE ON MECHATRONICS AND AUTOMATION (ICMA), IEEE, 2 August 2015 (2015-08-02), pages 1343-1348, XP033216584, DOI: 10.1109/ICMA.2015.7237680 ISBN: 978-1-4799-7097-1 [retrieved on 2015-09-02]

## Description

### TECHNICAL FIELD

This application generally relates to a vessel handling system and a method of handling such vessels by a gripper controlled by a robotic device.

### BACKROUND

Prior Art document DE 10 2019 211 245 A1 discloses a transport container gripper comprising a first gripper device arranged on a first fork arm and designed to grip the transport container at a first gripping section on a first side wall of the transport container, and comprising a second gripper device arranged on a second fork arm and designed to grip the transport container at a second gripping section opposite the first gripping section on a second side wall of the transport container, wherein the first gripper device and the second gripper device are designed to grip the transport container selectively in a first orientation of the gripper fork, in which a bridge section of the gripper fork encompasses a third side wall of the transport container, or in a second orientation of the gripper fork, rotated out of the first orientation, in which the bridge section of the gripper fork encompasses a top wall of the transport container.

Furthermore the paper
TAI KEVIN ET AL: "Development of a unique grip and lift mechanism for automated test water systems",2015 IEEE INTERNATIONAL CONFERENCE ON MECHATRONICS AND AUTOMATION (ICMA), IEEE, 2 August 2015 (2015-08-02), pages 1343-1348,DOI: 10.1109/ICMA.2015.7237680ISBN: 978-1-4799-7097-1
is a relevant piece of prior art.

The object of the invention is to provide a vessel handling system, comprising a vessel, a holding part and a gripper which is automatically movable by a robotic device, the vessel handling system being able to handle vessels of different size, of different shape and/or vessels which are wrapped into a foil or drape, easily and precisely in differing conditions by using a gripper with low complexity.

### SUMMARY OF THE INVENTION

In automation technology, a variety of technical solutions are known for designing a gripper in such a way that it can grip containers or vessels. Mostly active grippers are used, which have at least one degree of freedom. The at least one degree of freedom can be provided by any joint that is part of the gripper structure. In a common embodiment, a gripper comprises, for example, two gripper halves that are pivotally connected to each other at a common joint to allow the gripper to be opened and closed in an automatically driven manner. This allows, for example, containers and vessels to be gripped, lifted and automatically moved by the gripper in a pincer-like manner. A pincer grip is thereby mostly effected in frictionally engagement with clamping forces. Due to the at least one joint and the need to be able to generate sufficiently high clamping forces, such grippers are usually very large and heavy. Depending on the shape and surface properties of the containers or vessels, a particularly high clamping force must be applied in order to be able to hold the container or vessel securely, so that there is no danger of the gripped container or vessel unintentionally coming loose from the closed gripper.

However, there are applications in which on the one hand large and/or heavy grippers cannot be used and on the other hand the vessels to be gripped cannot be specified exactly, i.e. an exact gripping contour on the vessel itself is not known and may have changing properties. This can be the case, for example, if the vessel is very thin-walled and therefore not very stable, and in this respect cannot be gripped with a high clamping force. In special applications, it may be necessary for the vessel to be embedded in a protective sleeve, the protective sleeve surrounding the vessel in such a way that the vessel cannot be gripped directly without grasping the protective sleeve. It is obvious that a protective sleeve, i.e. a thin protective film does not have a clear permanent shape due to loose film areas and/or wrinkling.

In a specific embodiment, the vessel is a bottle, particularly for holding liquids.

For example, in the semiconductor industry, photoresists are used to carry out lithography processes in cleanrooms. These photoresists, which are fluids filled into bottles or vessels, have to be brought into the cleanroom from outside and emptied vessels have to be transported out of the cleanrooms again. Such liquid photoresists contain hazardous substances, i.e. liquids that can, for example, be harmful to health when inhaled, can contain acids and/or can be highly flammable. To protect employees who handle such vessels by hand and to protect cleanrooms from contamination by escaping liquids, such vessels are placed in a safety enclosure so that even if the vessel breaks accidentally, no harmful substances escape into the environment but are retained by the safety enclosure even though the vessel is damaged. The safety enclosure may comprise a foil, a drape or a plastic bag or pouch.

Besides of the semiconductor industry, the handling system according to the invention may also be used, for example, in the chemical industry, in the pharmaceutical industry or in microbiology.

Therefore, the present invention provides a vessel handling system, comprising:
a vessel having a wall forming a hollow body portion to receive a flowable medium and having a neck portion with an opening configured for the flowable medium to be filled into the hollow body and to be dispensed out of the vessel;
a holding part having attachment means configured for mounting the holding part to the vessel and having circumferential engagement means with an outer contour configured to protrude from the wall of the vessel when the holding part is mounted on the vessel, the circumferential engagement means comprising at least one lower surface;
a gripper having a fixture configured for mounting the gripper at a tool flange of a robotic device, the gripper further having a receptacle with at least one upper surface, the receptacle is configured to accommodate the circumferential engagement means of the holding part, when the gripper is carrying the holding part together with the vessel while the lower surface of the circumferential engagement means of the holding part being supported by the upper surface of the receptacle of the gripper.

The vessel can have any shape. For example, the vessel can be circular in axial cross-section. Alternatively, the vessel may be square, rectangular, or polygonal in axial cross-section. The hollow body portion of the vessel may be straight in shape. Alternatively, however, the hollow body portion of the vessel may have a different contour, for example a waisted or bulbous design. In some cases, the vessel can have at least one handle.

The flowable medium may be a liquid, a gel or a flowable powder for example. In a specific embodiment, the vessel is a bottle, particularly for holding liquids.

The holding part is preferable made from a rigid material. At least the circumferential engagement means is rigid in its properties. The attachment means comprises at least one fixing section at the holding part and may have one or several fastening means. The attachment means may be designed in such a manner that the holding part is detachable from the vessel, e.g. by unfastening the one or several fastening means. In other embodiments the holding part be permanently affixed to the vessel. In a further embodiment the holding part may possibly b formed in one piece together with the vessel.

According to the invention the gripper has a receptacle with at least one upper surface, the receptacle is configured to accommodate the circumferential engagement means of the holding part, when the gripper is carrying the holding part together with the vessel while the lower surface of the circumferential engagement means of the holding part being supported by the upper surface of the receptacle of the gripper.

Accordingly, the circumferential engagement means of the holding part rests positively on the upper surface of the receptacle of the gripper. Due to such positive engagement of the gripper and the holding part, the holding part is not only supported from below, in order to be carried, but is also laterally guided and supported, so that the holding part and thus the vessel attached to the holding part cannot unintentionally detach from the gripper, although the gripper is designed as a passive gripper which does not have any joints, drives or clamping means.

The receptacle of the gripper may have an open passage which provides a free space through which the neck portion of the vessel or even the hollow body portion of the vessel may extend through. This enables the gripper to be moved underneath the holding part from two opposing sides of the vessel and to take over the vessel by raising the gripper against the lower surface of the holding part. Therefore, the holding part may be attached to the vessel either on the neck portion of the vessel or on the hollow body portion of the vessel. The open passage of the receptacle may be circular, rectangular or may have any other convenient contour with respect to the properties of the holding part and/or the vessel. Likewise, the holding part itself and/or the upper surface of the gripper may be circular, rectangular or may have any other convenient contour with respect to the properties of the holding part and/or the vessel.

According to one aspect of the invention the receptacle of the gripper may have at least one recess with an inner side wall which corresponds to an outer side wall of the circumferential engagement means of the holding part to provide a form-locked join when the gripper is carrying the holding part.

The inner side wall of the recess builds up a frame which surrounds the holding part at the level of the circumferential engagement means of the holding part when the gripper carries the holding part. The recess of the receptacle of the gripper may have one single inner side wall or more than one side walls. If the recess is circular the receptacle may comprise only one single inner side wall. If the recess is rectangular or square the receptacle may comprise e.g., three inner side walls. Each inner side wall may be assigned to a corresponding upper surface of the receptacle. Therefore, the gripper may have one or more upper surfaces, preferable within the same plane.

According to another aspect of the vessel handling system, the receptacle of the gripper may be formed by a fork-like protrusion of the gripper having two opposite tines which are arranged with a distance from each other, each tine having a recess in the shape of an edge section of the circumferential engagement means of the holding part comprising the upper surface of the gripper to accommodate two opposite edge sections of the circumferential engagement means of the holding part from two opposite sides when the gripper is carrying the holding part.

Therefore, a first tine of the fork-like gripper can have a first step formed into the first tine of the fork-like gripper. The first step comprises a first upper surface which is oriented substantially in a horizontal plane and a first side wall which forms the inner side wall of the recess of the gripper that is oriented substantially in a vertical plane.

In the same sense but mirror symmetrically a second tine of the fork-like gripper can have a second step formed into the second tine of the fork-like gripper. The second step comprises a second upper surface which is oriented substantially in a horizontal plane and a second side wall which forms a further inner side wall of the recess of the gripper that is oriented substantially in a vertical plane.

In one embodiment the receptacle of the gripper may have at least one centering means with a first centering portion which corresponds to a mating second centering portion of the circumferential engagement means of the holding part to center the holding part on the gripper when the gripper is carrying the holding part.

The centering means may comprise a chamfer which is positioned above the recess. The chamfer may be positioned along an upper edge of the inner side wall of the recess of the gripper.

According to another aspect of the vessel handling system, the gripper may comprise a sensor means to detect at least one characteristic feature of the holding part and/or the vessel.

The holding part may comprise characteristic features which are configured to provide graphical representations of the position and/or orientation of the holding part relative to the gripper. The characteristic features can be captured by a camera. The features captured by the camera can be processed by an evaluation device, which is able to determine the position and/or the location of the holding part relative to the camera based on the position and/or location of the characteristic features on the holding part. The camera may be part of the gripper. As a result, the relative position and/or location of the gripper with respect to the holding part can automatically be determined.

The graphical representations may be markers, holes, pins, Barcodes and/or QR-Codes provided on at least one front side of the holding part. The graphical representations may comprise protrusions and/or recesses on the holding part. Alternatively or supplementary to protrusions and/or recesses, the graphical representations may comprise labels, stickers or the like, which can be attached to a surface of the holding part.

The graphical representations may comprise several sets of markers, holes, pins, Barcodes and/or QR-Codes, which are each arranged in radially extending sections on the front side of the holding part. Holes may be provided on the holding part by punching or drilling holes into the surface of the holding part.

In one specific embodiment the holding part has a circular contour. Having a circular contour, the holding part may be grasped by the gripper from any convenient direction.

Alternatively or supplementary to a circular shape of the holding part, the holding part may comprise a lower front side with a circular groove arranged coaxially to the center of the holding part. The circular groove may interact with a protrusion of the gripper and act as a centering means to center the holding part relative to the gripper. The protrusion of the gripper may also have a circular shape to match with the circular groove of the holding part.

The sensor means may comprise a camera and/or a nearfield sensor, which detects data and/or information of a RFID tag.

The camera can be provided at one of the tines, at the receptacle or at the fixture of the gripper. The camera may be configured to detect the position and/or the orientation of the holding part and consequently to detect the position and/or the orientation of the vessel. Data and/or information of the position and/or the orientation of the holding part and/or the vessel captured by the camera may be used to adapt motion commands for moving the robotic device by transforming position data and/or orientation data specified by a robot program based on the acquired camera data and/or information.

For easy image recognition by the camera the holding part and/or the vessel may be provided with markers, such as holes, pins, graphical marks or Barcodes or QR-Codes.

To detect further data and/or information, especially data and information not related to the optical appearance of the holding part and/or the vessel a RFID tag or similar code carrier may be attached to the vessel and/or the holding part and a nearfield sensor may be attached to one of the tines, at the receptacle or at the fixture of the gripper.

The RFID tag or the similar code carrier may transmit data and/or information related to the kind of flowable medium provided in the vessel, the properties of the flowable medium and/or the use of the specific flowable medium.

The holding part may comprise fastening means configured to mount the holding part to the hollow body portion of the vessel or to the neck portion of the vessel by clamping.

The attachment means may be designed in such a manner that the holding part is detachable from the vessel, e.g. by unfastening the one or several fastening means. The fastening means may comprise screws or similar means. Nevertheless, in other embodiments the holding part may be permanently affixed to the vessel. In a further embodiment the holding part may possibly b formed in one piece together with the vessel.

In the vessel handling system according any of the disclosed embodiments, the holding part may be configured to surround the vessel when the holding part is connected to the vessel and to protrude from the wall of the vessel in such a manner that a free space remains below the lower surface of the circumferential engagement means of the holding part which free space allows the gripper to move below the circumferential engagement means of the holding part and to take over the holding part together with the vessel by moving the gripper upwardly.

Therefore, the holding part may be attached to the vessel either on the neck portion of the vessel or on the hollow body portion of the vessel. The open passage of the receptacle may be circular, rectangular or may have any other convenient contour with respect to the properties of the holding part and/or the vessel. Likewise, the holding part itself and/or the upper surface of the gripper may be circular, rectangular or may have any other convenient contour with respect to the properties of the holding part and/or the vessel.

The robotic device may comprise an automated controlled robot arm and/or an automated controlled handling device with at least one degree of freedom.

Robot arms, in particular industrial robots, are working machines which can be equipped with tools for the automatic handling and/or processing of objects, the links of which are programmable by means of their joints in several axes of movement, e.g. regarding orientation, position and work sequence.

An industrial robot generally comprises the robot arm and a programmable controller (control device) which controls the motion sequences of the industrial robot during operation, in that one or more automatically or manually adjustable joints (robot axes) are moved particularly by electric motors or drives, in that the controller controls the motors or drives.

Among other things, robot arms can comprise a frame and a carousel which is rotatably mounted relative to the frame by means of a joint and on which a rocker is pivotably mounted by means of another joint. An arm extension can in turn be pivotably mounted on the rocker by means of a further joint. The arm carries a robot hand, whereby the arm and/or the robot hand can have several further joints.

The robotic arm having a plurality of links connected by joints may be configured as an articulated arm having a plurality of links and joints arranged in series, in particular, the robotic arm may be configured as a six-axis articulated arm robot or a seven-axis articulated arm robot. In a further embodiment, the robot arm may be a horizontal articulated arm robot, i.e., a SCARA robot.

The handling device may comprise an operating device, like a single linear actuator, an automated lifting device or a swivelling lever.

In yet another aspect the vessel, particularly for use in a vessel handling system as disclosed, comprises a wall forming a hollow body portion to receive a flowable medium and having a neck portion with an opening configured for the flowable medium to be filled into the hollow body and to be dispensed out of the vessel, the vessel further comprises a holding part having attachment means by which the holding part is mounted to the vessel and having circumferential engagement means with an outer contour configured to protrude from the wall of the vessel, the circumferential engagement means comprising at least one lower surface which provides a free space remaining below the lower surface of the circumferential engagement means of the holding part which free space allows the gripper to move below the circumferential engagement means of the holding part and to take over the holding part together with the vessel by moving the gripper upwardly, and at least the hollow body portion of the vessel is wrapped into a foil leaving free the circumferential engagement means of the holding part.

The object of the invention is also solved by a method of handling vessels by a gripper controlled by a robotic device, particularly by a vessel handling system as disclosed, the method comprising the steps:
mounting a holding part, in particular a holding part according to one of the disclosed embodiments, to the vessel, the holding part having circumferential engagement means with an outer contour configured to protrude from the wall of the vessel, the circumferential engagement means comprising at least one lower surface which provides a free space remaining below the lower surface of the circumferential engagement means of the holding part;
moving a gripper of a robotic device into a position within the free space remaining below the lower surface of the circumferential engagement means of the holding part, in which position of the gripper an upper surface of a receptacle of the gripper is arranged below the lower surface of the circumferential engagement means of the holding part;
moving the gripper upwardly by automatically controlling the robotic device until the upper surface of the receptacle of the gripper engages with the lower surface of the of the circumferential engagement means of the holding part and until the holding part is lifted together with the vessel to take over the holding part together with the vessel by the robotic device for further handling of the vessel.

Details of one specific embodiment of the invention are set forth in the accompanying drawings and the detailed description below. Single details of this specific embodiment partly and/or in other combinations may be features of other embodiments which are in the scope of the disclosed invention. Further features, objects and/or advantages of the invention will be apparent from the description and drawings, and from the claims.

### BRIEF DESCRIPTION OF THE DRAWINGS

- Fig. 1: illustrates a perspective view of a vessel provided with a holding part according to the invention;
- Fig. 2: illustrates a perspective view of a gripper according to the invention attached to a tool flange of a robotic device;
- Fig. 3: illustrates a perspective view of the receptacle of the gripper;
- Fig. 4: illustrates a cross-section of the receptacle of the gripper;
- Fig. 5: illustrates a cross-section of the vessel, the gripper and a circular holding part;
- Fig. 6: illustrates a bottom view of the gripper with the holding part placed onto the gripper;
- Fig. 7: a perspective view of the circular holding part from the lower surface;
- Fig. 8: a perspective view of the circular holding part according to Fig. 7 from the upper surface;
- Fig. 9: illustrates the steps of moving the gripper relative to the vessel for lifting the vessel by the robotic device; and
- Fig. 10: illustrates a flowchart of the method according to the invention.

### DETAILED DESCRIPTION

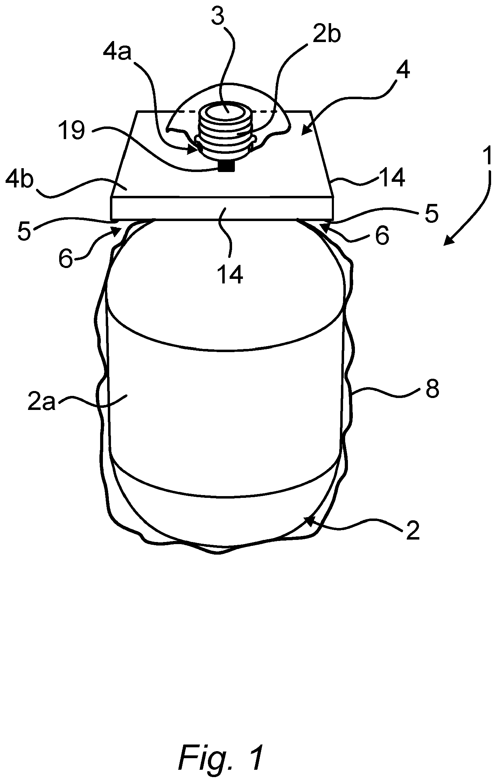

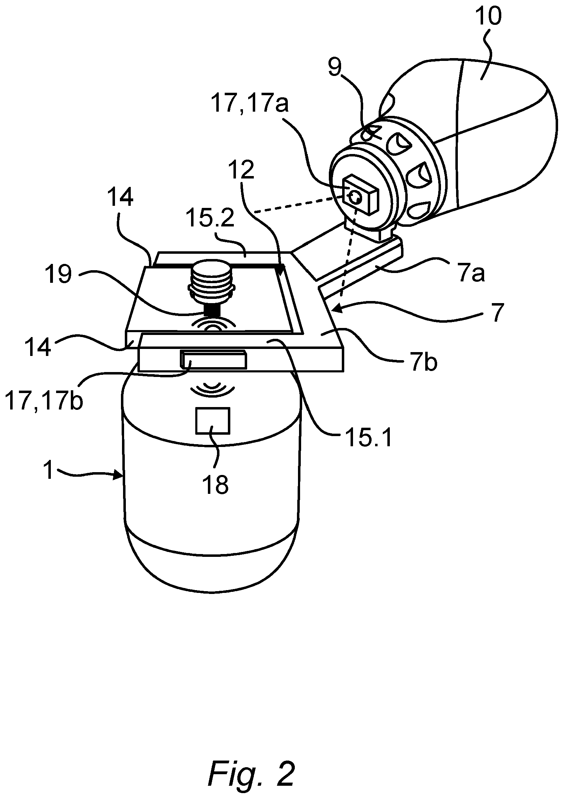

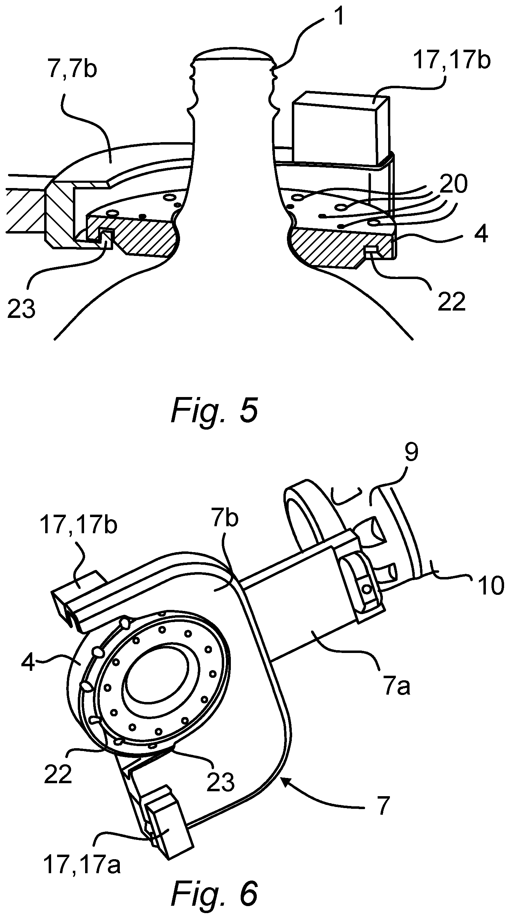

As illustrated in Fig. 1 a vessel 1, particularly for use in a vessel handling system, comprising a wall 2 forming a hollow body portion 2a to receive a flowable medium and having a neck portion 2b with an opening 3 configured for the flowable medium to be filled into the hollow body and to be dispensed out of the vessel 1. The opening 3 may be closed e.g., by a separate screw cap, which is not shown. The vessel 1 further comprises a holding part 4 having attachment means 4a by which the holding part 4 is mounted to the vessel 1 and having circumferential engagement means 4b with an outer contour configured to protrude from the wall 2 of the vessel 1, the circumferential engagement means 4b comprising at least one lower surface 5 which provides a free space 6 remaining below the lower surface 5 of the circumferential engagement means 4b of the holding part 4 which free space 6 allows a gripper 7, as shown in Fig. 2, to move below the circumferential engagement means 4b of the holding part 4 and to take over the holding part 4 together with the vessel 1 by moving the gripper 7 upwardly, as best shown in Fig. 5. At least the hollow body portion 2a of the vessel 2 may be wrapped into a foil 8 leaving free the circumferential engagement means 4b of the holding part 4.

The vessel 2 can have any shape different from what is shown in the figures. For example, the vessel 1 can be circular in axial cross-section. Alternatively, the vessel 1 may be square, rectangular, or polygonal in axial cross-section. The hollow body portion 2a of the vessel 1 may be straight in shape. Alternatively, however, the hollow body portion 2a of the vessel 1 may have a different contour, for example a waisted or bulbous design. In some cases, the vessel 1 can have at least one handle.

The holding part 4 is preferable made from a rigid material. At least the circumferential engagement means 4b is rigid in its properties. The attachment means 4a comprises at least one fixing section at the holding part 4 and may have one or several fastening means. The attachment means 4a may be designed in such a manner that the holding part is detachable from the vessel 1, e.g. by unfastening the one or several fastening means. In other embodiments the holding part 4 be permanently affixed to the vessel 1. In a further embodiment the holding part 4 may possibly b formed in one piece together with the vessel 1.

As best shown in Fig. 2 to Fig. 5 the vessel handling system, comprises:
the vessel 1 having the wall 2 forming a hollow body portion 2a to receive a flowable medium and having a neck portion 2b with the opening 3 configured for the flowable medium to be filled into the hollow body and to be dispensed out of the vessel 1;
the holding part 4 having the attachment means 4a configured for mounting the holding part 4 to the vessel 1 and having circumferential engagement means 4b with an outer contour configured to protrude from the wall 2 of the vessel 1 when the holding part 4 is mounted on the vessel 1, the circumferential engagement means 4b comprises the at least one lower surface 5;
the gripper 7 having a fixture 7a configured for mounting the gripper 7 at a tool flange 9 of a robotic device 10, the gripper 7 further having a receptacle 7b with at least one upper surface 11, the receptacle 7b is configured to accommodate the circumferential engagement means 4b of the holding part 4, when the gripper 7 is carrying the holding part 4 together with the vessel 1 while the lower surface 5 of the circumferential engagement means 4b of the holding part 4 being supported by the upper surface 11 of the receptacle 7b of the gripper 7, as shown in Fig. 5.

The receptacle 7b of the gripper 7 has at least one recess 12 with an inner side wall 13 which corresponds to an outer side wall 14 of the circumferential engagement means 4b of the holding part 4 to provide a form-locked join when the gripper 7 is carrying the holding part 4.

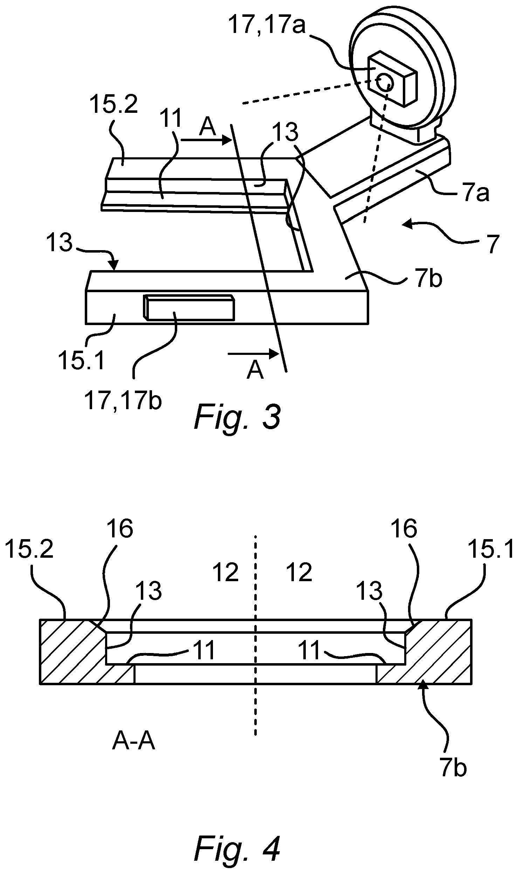

As best seen in Fig. 3 and Fig. 4, the receptacle 7b of the gripper 7 may be formed by a fork-like protrusion of the gripper 7 having two opposite tines 15.1, 15.2 which are arranged with a distance from each other, each tine 15.1, 15.2 having a recess 12 in the shape of an edge section of the circumferential engagement means 4b of the holding part 4 comprising the upper surface 11 of the gripper 7 to accommodate two opposite edge sections of the circumferential engagement means 4b of the holding part 4 from two opposite sides when the gripper 7 is carrying the holding part 4.

The circumferential engagement means 4b of the holding part 4 rests positively on the upper surface 11 of the receptacle 7b of the gripper 7. Due to such positive engagement of the gripper 7 and the holding part 4, the holding part 4 is not only supported from below, in order to be carried, but is also laterally guided and supported, so that the holding part 4 and thus the vessel 1 attached to the holding part 4 cannot unintentionally detach from the gripper 7, although the gripper 7 is designed as a passive gripper 7 which does not have any joints, drives or clamping means.

The receptacle 7b of the gripper 7 may have an open passage which provides a free space through which the neck portion 2a of the vessel 2 or even the hollow body portion 2b of the vessel 2 may extend through. This enables the gripper 7 to be moved underneath the holding part 4 from two opposing sides of the vessel 1 and to take over the vessel 1 by raising the gripper 7 against the lower surface 5 of the holding part 4. Therefore, the holding part 4 may be attached to the vessel 1 either on the neck portion 2b of the vessel 1, as illustrated by the figures, or on the hollow body portion 2a of the vessel 1. The open passage of the receptacle 7b may be circular, rectangular, as illustrated by the figures, or may have any other convenient contour with respect to the properties of the holding part 4 and/or the vessel 1. Likewise, the holding part 4 itself and/or the upper surface 11 of the gripper 7 may be circular, rectangular or may have any other convenient contour with respect to the properties of the holding part 4 and/or the vessel 1.

The inner side wall 13 of the recess 12 builds up a frame which surrounds the holding part 4 at the level of the circumferential engagement means 4b of the holding part 4 when the gripper 7 carries the holding part 4. The recess 12 of the receptacle 7b of the gripper 7 may have one single inner side wall 13 or more than one side walls 13. If the recess 12 is circular the receptacle 7b may comprise only one single inner side wall. If the recess 12 is rectangular or square, as illustrated by the figures, the receptacle 7b may comprise three inner side walls 13. Each inner side wall 13 may be assigned to a corresponding upper surface 11 of the receptacle 7b. Therefore, the gripper 7 may have one or more upper surfaces 11, preferable within the same plane.

Therefore, a first tine 15.1 of the fork-like gripper 7 can have a first step formed into the first tine 15.1 of the fork-like gripper 7. The first step comprises a first upper surface 11 which is oriented substantially in a horizontal plane and a first side wall which forms the inner side wall 13 of the recess 12 of the gripper 7 that is oriented substantially in a vertical plane.

In the same sense but mirror symmetrically a second tine 15.2 of the fork-like gripper 7 can have a second step formed into the second tine 15.2 of the fork-like gripper 7. The second step comprises a second upper surface 11 which is oriented substantially in a horizontal plane and a second side wall which forms a further inner side wall 13 of the recess 12 of the gripper 7 that is oriented substantially in a vertical plane.

The receptacle 7b of the gripper 7 has at least one centering means 16 with a first centering portion which corresponds to a mating second centering portion of the circumferential engagement means 4b of the holding part 4 to center the holding part 4 on the gripper 7 when the gripper 7 takes over or carries the holding part 4.

The centering means 16 may comprise a chamfer which is best seen in Fig. 4 and which is positioned above the recess 12. The chamfer may be positioned along an upper edge of the inner side wall 13 of the recess 12 of the gripper 7.

According to the embodiment of Fig. 2 the gripper 7 may comprise a sensor means 17 to detect at least one characteristic feature of the holding part 4 and/or the vessel 1. The sensor means 17 may comprise, e.g., a camera 17a and/or a nearfield sensor 17b, which detects data and/or information of a RFID tag 18 attached e.g., to the vessel 1.

The holding part 4 may comprise fastening means 19 configured to mount the holding part 4 to the hollow body portion 2a of the vessel 1 or to the neck portion 2b of the vessel 1 by clamping.

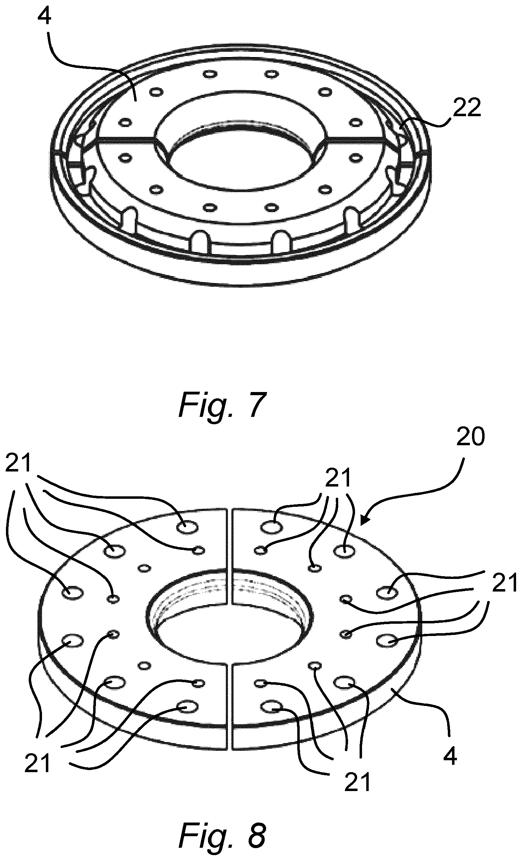

As shown in Fig. 5 to Fig. 8, the holding part 4 may comprise characteristic features 20 which are configured to provide graphical representations of the position and/or orientation of the holding part 4 relative to the gripper 7. Each feature disclosed in connection with the illustrated embodiment of a circular holding part 4 as shown in Fig. 5 to Fig. 8, may also apply to other embodiments of a holding part 4 of different shape, like the square holding part 4 as shown in Fig. 1 to Fig. 4.

The characteristic features can be captured by the sensor means 17, i.e. the camera 17a, when the gripper 7 is moving above the holding part 4. The characteristic features 20 captured by the camera 17a can be processed by an evaluation device, which is able to determine the position and/or the location of the holding part 4 relative to the camera 17a based on the position and/or location of the characteristic features 20 on the holding part 4. The camera 17a may be part of the gripper 7, as shown in Fig. 6. As a result, the relative position and/or location of the gripper 7 with respect to the holding part 4 can automatically be determined.

The graphical representations 20 may be markers, holes, pins, Barcodes and/or QR-Codes provided on at least one front side of the holding part 4. The graphical representations 20 may comprise protrusions and/or recesses, like holes 21 or bores on the holding part 4. Alternatively or supplementary to protrusions and/or recesses, the graphical representations 20 may comprise labels, stickers or the like, which can be attached to a surface of the holding part 4.

The graphical representations 20 may comprise several sets of markers, holes, pins, Barcodes and/or QR-Codes, which are each arranged in radially extending sections on the front side of the holding part 4. Holes may be provided on the holding part 4 by punching or drilling holes 21 into the surface of the holding part 4.

In one specific embodiment the holding part 4 has a circular contour. Having a circular contour, the holding part 4 may be grasped by the gripper 7 from any convenient direction.

Alternatively or supplementary to a circular shape of the holding part 4, the holding part 4 may comprise a lower front side with a circular groove 22 arranged coaxially to the center of the holding part 4. The circular groove 22 may interact with a protrusion 23 of the gripper 7, as best shown in Fig. 5, and act as a centering means to center the holding part 4 relative to the gripper 7. The protrusion 23 of the gripper 7 may also have a circular shape to match with the circular groove 22 of the holding part 4.

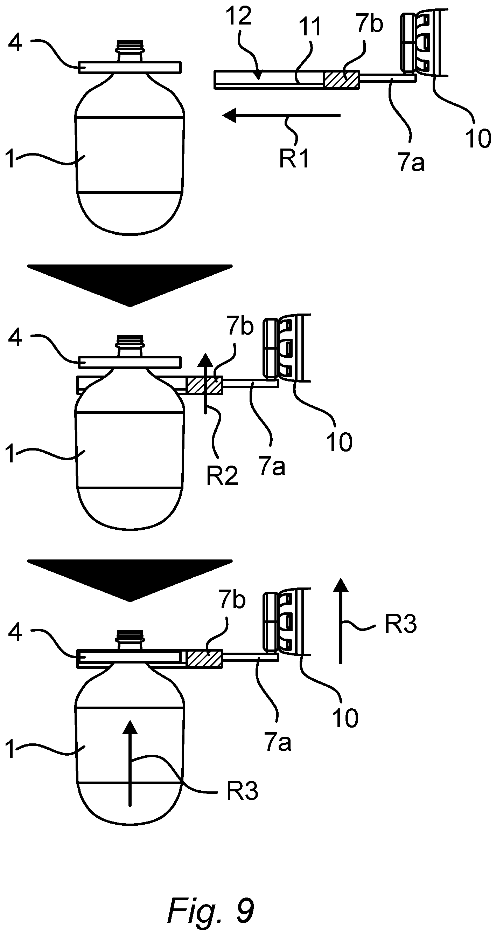

The holding part 4 is configured to surround the vessel 1 when the holding part 4 is connected to the vessel 1 and to protrude from the wall 2 of the vessel 1 in such a manner that a free space 6 remains below the lower surface 5 of the circumferential engagement means 4b of the holding part 4 which free space 6 allows the gripper 7 to move below the circumferential engagement means 4b of the holding part 4 and to take over the holding part 4 together with the vessel 1 by moving the gripper 7 upwardly, which is shown in Fig. 9 by the steps of movement of the gripper 7, illustrated by arrows R1, R2 and R3.

The robotic device 10 may comprise an automated controlled robot arm and/or an automated controlled handling device with at least one degree of freedom.

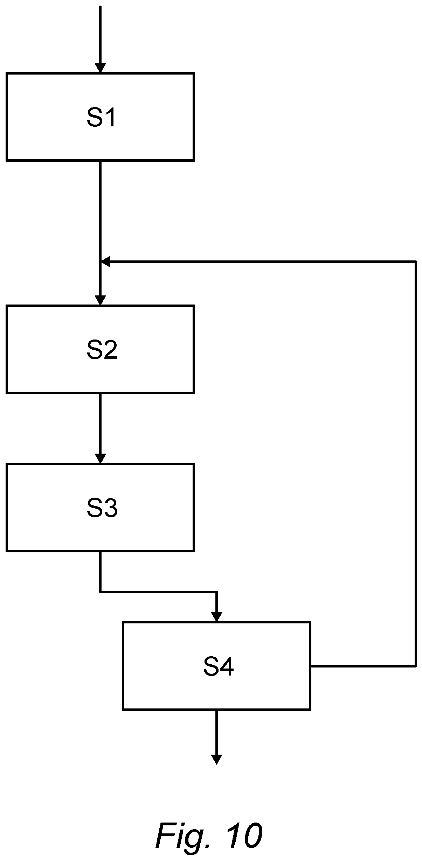

The method of handling vessels 1 by the gripper 7 controlled by the robotic device 10 comprises the steps S1 to S4 as illustrated in Fig. 10.

In a first step S1 the method comprises mounting the holding part 4 to the vessel 1, the holding part 4 having circumferential engagement means 4b with an outer contour configured to protrude from the wall 2 of the vessel 1, the circumferential engagement means 4b comprising at least one lower surface 5 which provides a free space 6 remaining below the lower surface 5 of the circumferential engagement means 4b of the holding part 4.

In a second step S2 the method comprises moving the gripper 7 of the robotic device 10 into a position within the free space 6 remaining below the lower surface 5 of the circumferential engagement means 4b of the holding part 4, in which position of the gripper 7 an upper surface 11 of a receptacle 7b of the gripper 7 is arranged below the lower surface 5 of the circumferential engagement means 4b of the holding part 4.

In a third step S3 the method comprises moving the gripper 7 upwardly by automatically controlling the robotic device 10 until the upper surface 11 of the receptacle 7b of the gripper 7 engages with the lower surface 5 of the of the circumferential engagement means 4b of the holding part 4 and until the holding part 4 is lifted together with the vessel 1 to take over the holding part 4 together with the vessel 1 by the robotic device 10.

In a fourth step S4 the method may comprise any kind of further handling of the vessel 1. After having completed the further handling of one vessel 1, the method steps S2, S3 and S4 may be repeated with another vessel 1, when the one vessel 1 is released from the gripper 7 at any convenient position.

## Claims

1. A vessel handling system, comprising:
a vessel (1) having a wall (2) forming a hollow body portion (2a) to receive a flowable medium and having a neck portion (2b) with an opening (3) configured for the flowable medium to be filled into the hollow body and to be dispensed out of the vessel (2);
a holding part (4) having attachment means (4a) configured for mounting the holding part (4) to the vessel (1) and having circumferential engagement means (4b) with an outer contour configured to protrude from the wall (2) of the vessel (1) when the holding part (4) is mounted on the vessel (1), the circumferential engagement means (4b) comprising at least one lower surface (5);
a gripper (7) having a fixture (7a) configured for mounting the gripper (7) at a tool flange (9) of a robotic device (10), the gripper (7) further having a receptacle (7b) with at least one upper surface (11), the receptacle (7b) is configured to accommodate the circumferential engagement means (4b) of the holding part (4), when the gripper (7) is carrying the holding part (4) together with the vessel (1) while the lower surface (5) of the circumferential engagement means (4b) of the holding part (4) being supported by the upper surface (11) of the receptacle (7b) of the gripper (7).

2. A vessel handling system according to claim 1, wherein the receptacle (7b) of the gripper (7) having at least one recess (12) with an inner side wall (13) which corresponds to an outer side wall (14) of the circumferential engagement means (4b) of the holding part (4) to provide a form-locked join when the gripper (7) is carrying the holding part (4).

3. A vessel handling system according to claim 1 or 2, wherein the receptacle (7b) of the gripper (7) is formed by a fork-like protrusion of the gripper (7) having two opposite tines (15.1, 15.2) which are arranged with a distance from each other, each tine (15.1, 15.2) having a recess (12) in the shape of an edge section of the circumferential engagement means (4b) of the holding part (4) comprising the upper surface (11) of the gripper (7) to accommodate two opposite edge sections of the circumferential engagement means (4b) of the holding part (4) from two opposite sides when the gripper (7) is carrying the holding part (4).

4. A vessel handling system according to claims 1 to 3, wherein the receptacle (7b) of the gripper (7) having at least one centering means (16) with a first centering portion which corresponds to a mating second centering portion of the circumferential engagement means (4b) of the holding part (4) to center the holding part (4) on the gripper (7) when the gripper (7) is carrying the holding part (4).

5. A vessel handling system according to claims 1 to 4, wherein the gripper (7) comprises a sensor means (17) to detect at least one characteristic feature of the holding part (4) and/or the vessel (1).

6. A vessel handling system according to claims 1 to 5, wherein the holding part (4) comprises fastening means (19) configured to mount the holding part (4) to the hollow body portion (2a) of the vessel (1) or to the neck portion (2b) of the vessel (1) by clamping.

7. A vessel handling system according to claims 1 to 6, wherein the holding part (4) is configured to surround the vessel (1) when the holding part (4) is connected to the vessel (1) and to protrude from the wall (2) of the vessel (1) in such a manner that a free space (6) remains below the lower surface (5) of the circumferential engagement means (4b) of the holding part (4) which free space (6) allows the gripper (7) to move below the circumferential engagement means (4b) of the holding part (4) and to take over the holding part (4) together with the vessel (1) by moving the gripper (7) upwardly.

8. A vessel handling system according to claims 1 to 7, wherein the robotic device (10) comprises an automated controlled robot arm and/or an automated controlled handling device with at least one degree of freedom.

9. A vessel handling system according to claims 1 to 8, wherein the holding part (4) comprises characteristic features which are configured to provide graphical representations of the position and/or orientation of the holding part (4) relative to the gripper (7).

10. A vessel handling system according to claim 9, wherein the graphical representations are markers, holes, pins, Barcodes and/or QR-Codes provided on at least one front side of the holding part (4).

11. A vessel handling system according to claim 10, wherein the graphical representations comprise several sets of markers, holes, pins, Barcodes and/or QR-Codes, which are each arranged in radially extending sections on the front side of the holding part (4).

12. A vessel handling system according to claims 1 to 11, wherein the holding part (4) has a circular contour.

13. A vessel handling system according to claims 1 to 12, wherein the holding part (4) comprises a lower front side with a circular groove arranged coaxially to the center of the holding part (4).

14. A method of handling vessels (1) by a gripper (7) controlled by a robotic device (10), the method comprising the steps:
mounting a holding part (4), in particular a holding part (4) according to claims 9 to 13, to the vessel (1), the holding part (4) having circumferential engagement means (4a) with an outer contour configured to protrude from the wall (2) of the vessel (1), the circumferential engagement means (4a) comprising at least one lower surface (5) which provides a free space (6) remaining below the lower surface (5) of the circumferential engagement means (4b) of the holding part (4);
moving a gripper (7) of a robotic device (10) into a position within the free space (6) remaining below the lower surface (5) of the circumferential engagement means (4b) of the holding part (4), in which position of the gripper (7) an upper surface (11) of a receptacle (7b) of the gripper (7) is arranged below the lower surface (5) of the circumferential engagement means (4b) of the holding part (4);
moving the gripper (7) upwardly by automatically controlling the robotic device (10) until the upper surface (11) of the receptacle (7b) of the gripper (7) engages with the lower surface (5) of the circumferential engagement means (4b) of the holding part (4) and until the holding part (4) is lifted together with the vessel (1) to take over the holding part (4) together with the vessel (1) by the robotic device (10) for further handling of the vessel (1).

## Patentansprüche

1. Gefäßhandhabungssystem, aufweisend:
ein Gefäß (1) mit einer Wand (2), die einen Hohlkörperabschnitt (2a) zur Aufnahme eines fließfähigen Mediums bildet, und mit einem Halsabschnitt (2b) mit einer Öffnung (3), die so gestaltet ist, dass das fließfähige Medium in den Hohlkörper eingefüllt und aus dem Gefäß (1) abgegeben werden kann;
ein Halteteil (4) mit Befestigungsmitteln (4a), die zum Befestigen des Halteteils (4) an dem Gefäß (1) ausgebildet sind, und mit Umfangseingriffsmitteln (4b) mit einer Außenkontur, die so ausgebildet sind, dass sie von der Wand (2) des Gefäßes (1) vorstehen, wenn das Halteteil (4) an dem Gefäß (1) befestigt ist, wobei die Umfangseingriffsmittel (4b) mindestens eine untere Fläche (5) umfassen;
einen Greifer (7) mit einer Halterung (7a), die zur Befestigung des Greifers (7) an einem Werkzeugflansch (9) einer Robotervorrichtung (10) ausgebildet ist, wobei der Greifer (7) außerdem eine Aufnahme (7b) mit mindestens einer oberen Fläche (11) aufweist, wobei die Aufnahme (7b) zum Aufnehmen der Umfangseingriffsmittel (4b) des Halteteils (4) ausgebildet ist, wenn der Greifer (7) das Halteteil (4) zusammen mit dem Gefäß (1) trägt, während die untere Fläche (5) der Umfangseingriffsmittel (4b) des Halteteils (4) von der oberen Fläche (11) der Aufnahme (7b) des Greifers (7) getragen wird.

2. Gefäßhandhabungssystem nach Anspruch 1, wobei die Aufnahme (7b) des Greifers (7) mindestens eine Aussparung (12) mit einer inneren Seitenwand (13) aufweist, die mit einer äußeren Seitenwand (14) der Umfangseingriffsmittel (4b) des Halteteils (4) korrespondiert, um eine formschlüssige Verbindung herzustellen, wenn der Greifer (7) das Halteteil (4) trägt.

3. Gefäßhandhabungssystem nach Anspruch 1 oder 2, wobei die Aufnahme (7b) des Greifers (7) durch einen gabelförmigen Vorsprung des Greifers (7) gebildet ist, der zwei gegenüberliegende Zinken (15.1, 15.2) aufweist, die mit Abstand zueinander angeordnet sind, wobei jede Zinke (15.1, 15.2) eine Aussparung (12) in Form eines die obere Fläche (11) des Greifers (7) umfassenden Randabschnitts der Umfangseingriffsmittel (4b) des Halteteils (4) aufweist, um zwei gegenüberliegende Randabschnitte der Umfangseingriffsmittel (4b) des Halteteils (4) von zwei gegenüberliegenden Seiten aufzunehmen, wenn der Greifer (7) das Halteteil (4) trägt.

4. Gefäßhandhabungssystem nach einem der Ansprüche 1 bis 3, wobei die Aufnahme (7b) des Greifers (7) mindestens ein Zentriermittel (16) mit einem ersten Zentrierabschnitt aufweist, der einem passenden zweiten Zentrierabschnitt der Umfangseingriffsmittel (4b) des Halteteils (4) entspricht, um das Halteteil (4) am Greifer (7) zu zentrieren, wenn der Greifer (7) das Halteteil (4) trägt.

5. Gefäßhandhabungssystem nach einem der Ansprüche 1 bis 4, wobei der Greifer (7) eine Sensoreinrichtung (17) zur Erfassung mindestens eines charakteristischen Merkmals des Halteteils (4) und/oder des Gefäßes (1) aufweist.

6. Gefäßhandhabungssystem nach einem der Ansprüche 1 bis 5, wobei das Halteteil (4) Befestigungsmittel (19) umfasst, die so ausgebildet sind, dass sie das Halteteil (4) an dem Hohlkörperabschnitt (2a) des Gefäßes (1) oder an dem Halsabschnitt (2b) des Gefäßes (1) durch Klemmen befestigen.

7. Gefäßhandhabungssystem nach einem der Ansprüche 1 bis 6, wobei das Halteteil (4) so ausgebildet ist, dass es das Gefäß (1) umgibt, wenn das Halteteil (4) mit dem Gefäß (1) verbunden ist, und so aus der Wand (2) des Gefäßes (1) herausragt, dass ein freier Raum (6) unter der unteren Fläche (5) der Umfangseingriffsmittel (4b) des Halteteils (4) verbleibt, welcher freie Raum (6) es dem Greifer (7) erlaubt, sich unter die Umfangseingriffsmittel (4b) des Halteteils (4) zu bewegen und das Halteteil (4) zusammen mit dem Gefäß (1) zu übernehmen, indem der Greifer (7) nach oben bewegt wird.

8. Gefäßhandhabungssystem nach einem der Ansprüche 1 bis 7, wobei die Robotervorrichtung (10) einen automatisch gesteuerten Roboterarm und/oder eine automatisch gesteuerte Handhabungsvorrichtung mit mindestens einem Freiheitsgrad umfasst.

9. Gefäßhandhabungssystem nach einem der Ansprüche 1 bis 8, wobei das Halteteil (4) charakteristische Merkmale aufweist, die so ausgebildet sind, dass sie grafische Darstellungen der Position und/oder Ausrichtung des Halteteils (4) relativ zum Greifer (7) liefern.

10. Gefäßhandhabungssystem nach Anspruch 9, wobei die grafischen Darstellungen Markierungen, Löcher, Stifte, Barcodes und/oder QR-Codes sind, die auf mindestens einer Vorderseite des Halteteils (4) angebracht sind.

11. Gefäßhandhabungssystem nach Anspruch 10, wobei die grafischen Darstellungen mehrere Sätze von Markierungen, Löchern, Stiften, Barcodes und/oder QR-Codes umfassen, die jeweils in radial verlaufenden Abschnitten auf der Vorderseite des Halteteils (4) angeordnet sind.

12. Gefäßhandhabungssystem nach einem der Ansprüche 1 bis 11, wobei das Halteteil (4) eine kreisförmige Kontur aufweist.

13. Gefäßhandhabungssystem nach einem der Ansprüche 1 bis 12, wobei das Halteteil (4) eine untere Stirnseite mit einer koaxial zur Mitte des Halteteils (4) angeordneten kreisförmigen Nut aufweist.

14. Verfahren zur Handhabung von Gefäßen (1) durch einen Greifer (7), der von einer Robotervorrichtung (10) gesteuert wird, wobei das Verfahren die folgenden Schritte umfasst:
Anbringen eines Halteteils (4), insbesondere eines Halteteils (4) nach einem der Ansprüche 9 bis 13, an das Gefäß (1), wobei das Halteteil (4) Umfangseingriffsmittel (4b) mit einer Außenkontur aufweist, die so ausgebildet ist, dass sie von der Wand (2) des Gefäßes (1) absteht, wobei die Umfangseingriffsmittel (4b) mindestens eine untere Fläche (5) aufweisen, die einen unterhalb der unteren Fläche (5) der Umfangseingriffsmittel (4b) des Halteteils (4) verbleibenden freien Raum (6) bereitstellt;
Bewegen eines Greifers (7) einer Robotervorrichtung (10) in eine Position innerhalb des freien Raumes (6), die unterhalb der unteren Fläche (5) der Umfangseingriffsmittel (4b) des Halteteils (4) verbleibt, wobei in dieser Position des Greifers (7) eine obere Fläche (11) einer Aufnahme (7b) des Greifers (7) unterhalb der unteren Fläche (5) der Umfangseingriffsmittel (4b) des Halteteils (4) angeordnet ist;
Bewegen des Greifers (7) nach oben durch automatisches Steuern der Robotervorrichtung (10), bis die obere Fläche (11) der Aufnahme (7b) des Greifers (7) mit der unteren Fläche (5) der Umfangseingriffsmittel (4b) des Halteteils (4) in Eingriff kommt und bis das Halteteil (4) zusammen mit dem Gefäß (1) angehoben wird, um das Halteteil (4) zusammen mit dem Gefäß (1) durch die Robotervorrichtung (10) zur weiteren Handhabung des Gefäßes (1) zu übernehmen.

## Revendications

1. Système de manutention des récipients comprenant
un récipient (1) ayant une paroi (2) formant une section du corps creux (2a) destiné à recevoir un fluide et ayant une section du cou (2b) avec une ouverture (3) configurée pour que le fluide soit rempli dans le corps creux et soit distribué hors du récipient (1);
une pièce de maintien (4) ayant des moyens de fixation (4a) configurés pour monter la pièce de maintien (4) sur le récipient (1) et ayant des moyens d'engagement circonférentiel (4b) avec un contour extérieur configuré pour faire saillie de la paroi (2) du récipient (1) lorsque la pièce de maintien (4) est montée sur le récipient (1), les moyens d'engagement circonférentiel (4b) comprenant au moins une surface inférieure (5) ;
une pince (7) ayant une fixation (7a) configurée pour monter la pince (7) sur une bride d'outil (9) d'un dispositif robotique (10), la pince (7) ayant en outre un réceptacle (7b) avec au moins une surface supérieure (11), le réceptacle (7b) étant configuré pour accueillir le moyen d'engagement circonférentiel (4b) de la pièce de maintien (4), lorsque la pince (7) porte la pièce de maintien (4) avec le récipient (1), pendant la surface inférieure (5) du moyen d'engagement circonférentiel (4b) de la pièce de maintien (4) étant supportée par la surface supérieure (11) du réceptacle (7b) de la pince (7).

2. Système de manutention des récipients selon la revendication 1, dans lequel le réceptacle (7b) de la pince (7) comporte au moins un renfoncement (12) avec une paroi latérale intérieure (13) qui correspond à une paroi latérale extérieure (14) du moyen d'engagement circonférentiel (4b) de la pièce de maintien (4) pour fournir un assemblage par complémentaire de forme lorsque la pince (7) porte la pièce de maintien (4).

3. Système de manutention des récipients selon la revendication 1 ou 2, dans lequel le réceptacle (7b) de la pince (7) est formé par une saillie en forme de fourche de la pince (7) ayant deux dents opposées (15.1, 15.2) qui sont disposées à une distance l'une de l'autre, chaque dent (15.1, 15.2) ayant un renfoncement (12) en forme de section de bord du moyen d'engagement circonférentiel (4b) de la pièce de maintien (4) comprenant la surface supérieure (11) de la pince (7) pour accueillir deux sections de bord opposées du moyen d'engagement circonférentiel (4b) de la pièce de maintien (4) de deux côtés opposés lorsque la pince (7) porte la pièce de maintien (4).

4. Système de manutention des récipients selon les revendications 1 à 3, dans lequel le réceptacle (7b) de la pince (7) comporte au moins un moyen de centrage (16) avec une première portion de centrage qui correspond à une seconde portion de centrage adapté du moyen d'engagement circonférentiel (4b) de la pièce de maintien (4) pour centrer la pièce de maintien (4) sur la pince (7) lorsque la pince (7) porte la pièce de maintien (4).

5. Système de manutention des récipients selon les revendications 1 à 4, dans lequel la pince (7) comprend un capteur (17) pour détecter au moins une caractéristique distinctive de la pièce de maintien (4) et/ou du récipient (1).

6. Système de manutention des récipients selon les revendications 1 à 5, dans lequel la pièce de maintien (4) comprend des moyens de fixation (19) configurés pour monter la pièce de maintien (4) sur la section du corps creux (2a) du récipient (1) ou sur la section du cou (2b) du récipient (1) par serrage.

7. Système de manutention des récipients selon les revendications 1 à 6, dans lequel la partie de maintien (4) est configurée pour entourer le récipient (1) lorsque la partie de maintien (4) est connectée au récipient (1) et pour faire saillie de la paroi (2) du récipient (1) de telle sorte qu'un espace libre (6) reste sous la surface inférieure (5) du moyen d'engagement circonférentiel (4b) de la partie de maintien (4), cet espace libre (6) permet à la pince (7) de se déplacer sous le moyen d'engagement circonférentiel (4b) de la partie de maintien (4) et de reprendre la partie de maintien (4) avec le récipient (1) en déplaçant la pince (7) vers le haut.

8. Système de manutention des récipients selon les revendications 1 à 7, dans lequel le dispositif robotique (10) comprend un bras de robot à commande automatisée et/ou un dispositif de manutention à commande automatisée doté d'au moins un degré de liberté.

9. Système de manutention des récipients selon les revendications 1 à 8, dans lequel la pièce de maintien (4) comprend des caractéristiques distinctives configurés pour fournir des représentations graphiques de la position et/ou de l'orientation de la pièce de maintien (4) par rapport à la pince (7).

10. Système de manutention des récipients selon la revendication 9, dans lequel les représentations graphiques sont des marqueurs, des trous, des épingles, des codes-barres et/ou des codes QR fournis sur au moins une face avant de la partie de maintien (4).

11. Système de manutention des récipients selon la revendication 10, dans lequel les représentations graphiques comprennent plusieurs ensembles de marqueurs, de trous, d'épingles, de codes-barres et/ou de codes QR, qui sont chacun disposés dans des sections s'étendant radialement sur la face avant de la pièce de maintien (4).

12. Système de manutention des récipients selon les revendications 1 à 11, dans lequel la partie de maintien (4) a un contour circulaire.

13. Système de manutention des récipients selon les revendications 1 à 12, dans lequel la partie de maintien (4) comprend un côté avant inférieur avec une rainure circulaire disposée coaxialement au centre de la partie de maintien (4).

14. Méthode de manutention des récipients (1) par une pince (7) commandée par un dispositif robotique (10), la méthode comprenant les étapes suivantes:
monter une pièce de maintien (4), en particulier une pièce de maintien (4) selon les revendications 9 à 13, sur le récipient (1), la pièce de maintien (4) ayant des moyens d'engagement circonférentiel (4b) avec un contour extérieur configuré pour faire saillie de la paroi (2) du récipient (1), les moyens d'engagement circonférentiel (4b) comprenant au moins une surface inférieure (5) qui fournit un espace libre (6) restant en dessous de la surface inférieure (5) des moyens d'engagement circonférentiel (4b) de la pièce de maintien (4);
déplacer une pince (7) d'un dispositif robotique (10) dans une position à l'intérieur de l'espace libre (6) restant sous la surface inférieure (5) du moyen d'engagement circonférentiel (4b) de la partie de maintien (4), dans laquelle la position de la pince (7), une surface supérieure (11) d'un réceptacle (7b) de la pince (7) est disposée sous la surface inférieure (5) du moyen d'engagement circonférentiel (4b) de la partie de maintien (4);
déplacer la pince (7) vers le haut en contrôlant automatiquement le dispositif robotique (10) jusqu'à ce que la surface supérieure (11) du réceptacle (7b) de la pince (7) s'engage avec la surface inférieure (5) du moyen d'engagement circonférentiel (4b) de la pièce de maintien (4) et jusqu'à ce que la pièce de maintien (4) soit soulevée avec le récipient (1) pour reprendre la partie de maintien (4) avec le récipient (1) par le dispositif robotique (10) pour la manipulation ultérieure du récipient (1).
